# EUROPEAN PATENT SPECIFICATION

(11) **EP 0 931 245 B1**
(45) Date of publication and mention of the grant of the patent: **16.07.2003**
(21) Application number: 97943971.8
(22) Date of filing: 07.10.1997
(51) Int. Cl.: G01G 15/00, G01G 19/14

(54) **APPARATUS AND METHOD FOR PROCESSING ARTICLES**
VORRICHTUNG UND VERFAHREN ZUR ÜBERWACHUNG DES VERARBEITENS VON ARTIKELN
APPAREIL ET PROCEDE POUR LE TRAITEMENT D'ARTICLES

(30) Priority: 08.10.1996 GB 9620983; 23.04.1997 GB 9708206
(43) Date of publication of application: 28.07.1999
(73) Proprietor: Linco Food Systems A/S, 8380 Trige (DK)
(72) Inventor: BROOK, Richard, Morley, Huddersfield, West Yorkshire HD4 7DZ (GB)
(74) Representative: Nielsen, Leif
(86) International application number: GB9702682
(87) International publication number: WO98015804

(56) References cited:
- EP-A- 0 501 208
- WO-A-89/05444
- GB-A- 2 125 174
- US-A- 5 004 093

## Description

The invention, relates to an apparatus and method for processing articles moving in succession along a path, particularly, but not exclusively poultry carcasses.

Many forms of apparatus are known for processing poultry carcasses. The carcasses are usually conveyed by hanging them from shackles attached to a continuous conveyor.

The carcasses usually have to be weighed but there are many problems associated with weighing and the problems become more severe as processing rates increase.

For example, if the carcasses are arranged too closely together, then one carcass may touch another while being weighed, which will give an inaccurate result.

Various forms of apparatus have been developed to reduce the problems and examples of known systems are disclosed in our earlier U.K. Patents numbers 1 551 701 and 2 146 131.

Moreover, US-A-5 004 093 discloses an apparatus for processing articles moving in succession along a path. The apparatus comprises conveyor means arranged to convey a succession of articles along a path, means to split the succession of articles into at least two streams and means to weigh each article while the articles are split into the two streams. There is no disclosure that weighing could be carried out during the transferring while the articles are arranged on the transfer means.

We have now concluded that a more radical solution to the problem is required with modern processing apparatus where even higher processing rates are required.

We have also made further developments with a view to coping with problems such as might be caused by damaged, misaligned, and/or distorted poultry carcass carrying shackles.

The invention provides apparatus for processing articles moving in succession along a path, the apparatus comprising conveyor means arranged to convey a succession of articles along the path, means to split the succession of articles into at least two streams, and means to weigh each article on the transter means while the articles are split into the two streams.

Splitting the articles into two or more streams not only allows more time for weighing each article, even when the articles are moving at relatively high speed, but it also minimises the risk that one poultry carcass will interfere with an adjacent one.

The transfer means may transfer articles from a first part of the conveyor means to a second part of the same conveyor means.

Alternatively, the transfer means may transfer articles from a first conveyor means to a second conveyor means.

Where two separate conveyor means are used, the pitch of the articles i.e. the spacing between adjacent articles may be different on the second conveyor means, compared to the first conveyor means, provided the ratio of the line speeds of the conveyor means is the same as the ratio of the spacing between adjacent article carriers.

The transfer means may comprise a mechanism operable to release an article from a first article carrier, swing the article into a weighing position, and then swing the article into another position in which it is placed on a second article carrier.

The article carriers may comprise poultry carcass carrying shackles.

Preferably, the conveyor means extends around a bend and articles are transferred from the conveyor means on the bend.

This has the advantage that delivering and receiving article carriers move away from each other immediately after the transfer point, and there is therefore less likelihood of accidental entanglement.

A corner wheel may be used to provide the bend.

The two streams are preferably provided by removing articles from two or more points on the bend.

There may be one transfer wheel around which the conveyor means passes, and at least two weighing wheels.

There may be an intermediate wheel between the transfer wheel and each weighing wheel.

At least one control wheel may be arranged adjacent to at least one weighing wheel to control the articles as they are replaced on the conveyor means.

Control means may be provided in the nip between a transfer wheel and a weighing wheel.

The control means may be arranged to prevent an article e.g. a poultry carcass, which is being transferred, from being pulled away from its carrier by either of the adjacent articles. With poultry carcasses, for example, the wings of adjacent birds can be interlocked.

The control means may be arranged to stabilise the article being transferred, and/or lock the article into the receiving carrier.

The invention includes a method of processing articles moving in succession along a path, comprising conveying the articles in succession along the path, splitting the succession of articles into at least two streams using at least one transfer means, and weighing each article on the transfer means while the articles are split into the two streams.

By way of example, specific embodiments of the invention will now be described, with reference to the accompanying drawings, in which :-
Figure 1 is a perspective view showing the general type of poultry processing apparatus with which the invention is concerned;
Figure 2 is a diagrammatic plan view showing one embodiment of the invention;
Figure 3 is a diagrammatic plan view showing a second embodiment of the invention;
Figure 4 is a diagrammatic plan view of a further embodiment of the invention;
Figure 5 is a diagrammatic plan view illustrating another embodiment of the invention; and
Figure 6 is a diagrammatic plan view illustrating a still further embodiment.

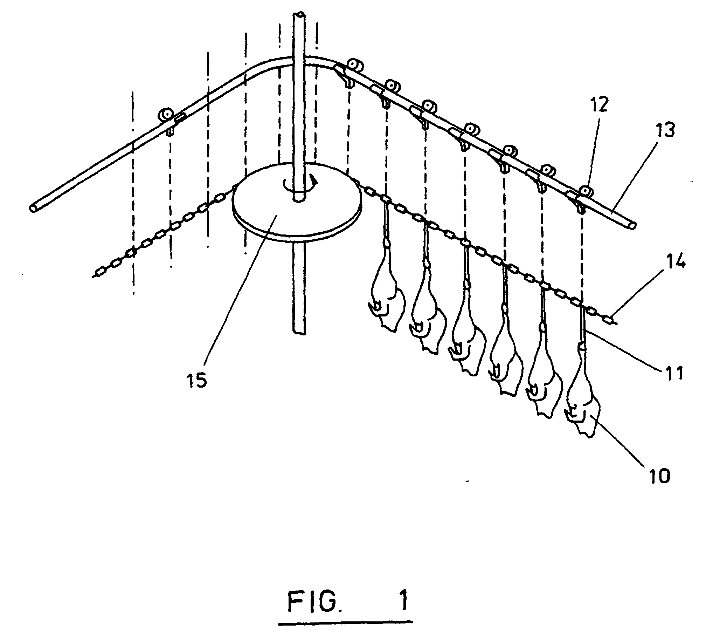

Figure 1 shows the general type of poultry processing apparatus with which the invention is concerned. A plurality of poultry carcasses 10 are suspended from shackles 11 for conveying along a path through a poultry processing plant, so that the carcasses can be weighed, graded, and then sorted or processed according to weight and grade. The shackles 11 are suspended from trolleys 12 running along a rail 13. The shackles are moved by a continuous chain 14 and at points along the path the chain may pass around corner wheels such as 15.

In prior art arrangements, the carcasses 10 are weighed while still attached to the shackles II, which has certain limitations.

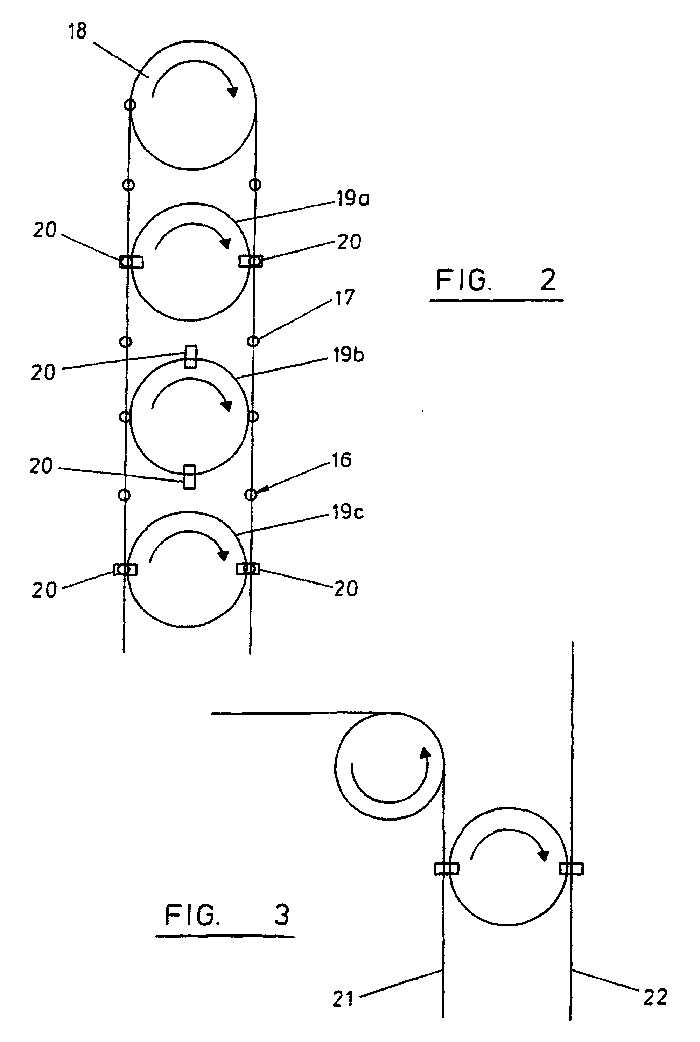

Figure 2 is a diagrammatic plan view of an embodiment of the invention in which a chain 16 conveys articles 17 along a conveyor path, which at one point in the processing plant passes around a corner wheel 18.

This embodiment of apparatus according to the invention incorporates a transfer device and in the example shown in Figure 2, three transfer devices are provided, each comprising a rotatable member 19A, 19B and 19C, each having a pair of handling devices 20 thereon, the handling devices being arranged at opposite sides of the respective rotatable member.

As an article approaches one of the handling devices, the handling device lifts the article clear of its associated article carrier, and the respective rotatable member then rotates through 90°, moving the article into a position where it can be weighed. Figure 2 shows transfer device 19A about to pick up an article. Transfer device 19B has already picked up an article and moved it into the position for weighing.

After an article has been weighed, the transfer device and associated handling device cooperate to bring the article towards the opposite run of the conveyor chain 16 and then replace the article on an empty article carrier on the opposite run of the conveyor chain 16.

The movement of each transfer device and the associated handling devices is controlled dependent upon the sensing of the positions of empty article carriers which are to receive weighed articles. This means that the apparatus can cope with situations in which the pitch of article carriers along the conveyor path may vary, for example because of wear in the links of the chain, where the conveyor is driven by a chain.

By completely removing the articles from between their adjacent articles, there is no possibility of an article touching adjacent articles while it is being weighed, and so the articles can be spaced more closely together on the conveyor runs than is possible with prior art arrangements.

The arrangements shown in Figure 2 involves three transfer devices, so that weighing can be carried out at three positions. By weighing at three positions rather than one, more time is made available to carry out each individual weighing operation.

For some applications it may be possible to use two weighing positions or more than three, depending on requirements.

It is not essential that the transfer device picks up articles and replaces articles on the same conveyor run. Figure 3 shows an alternative embodiment in which articles are picked up from one conveyor run 21, weighed, and then replaced on an entirely separate conveyor run 22.

Control means associated with the apparatus counts articles as they are removed from one conveyor run, and checks that each article is replaced on an empty article carrier of the other run, irrespective of any difference in pitch between the two conveyor runs, or difference in speed.

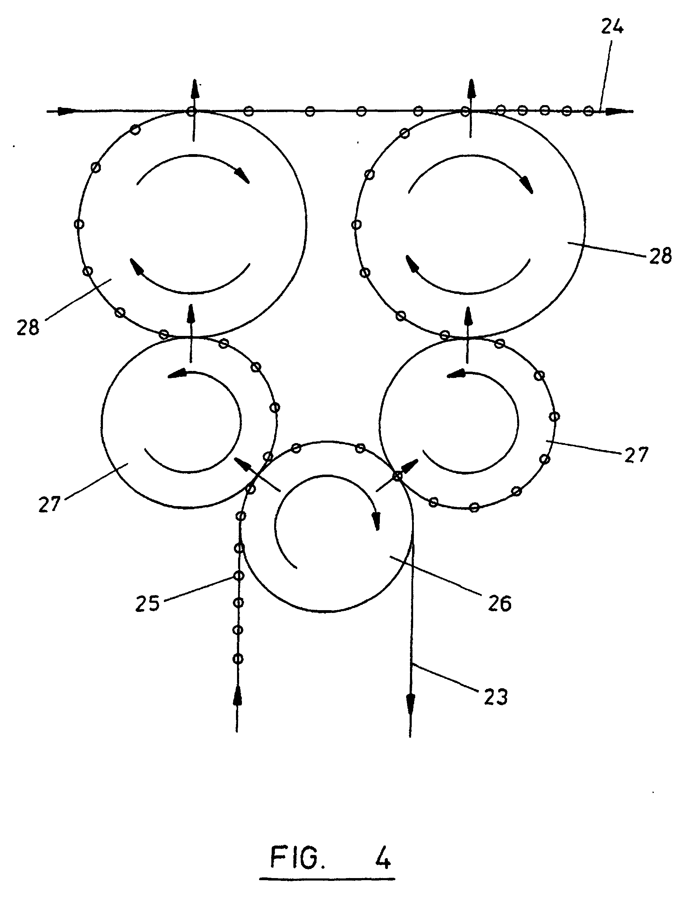

In Figure 4 there is shown a first conveyor 23 and a second conveyor 24. The conveyors are arranged to convey a succession of poultry carcasses at a constant linear speed on spaced apart poultry carcass carrying shackles which are illustrated diagrammatically, for example at 25 on conveyor 23.

To facilitate accurate selective removal of carcasses for weighing, conveyor 23 is arranged to travel around a transfer wheel 26 which is rotating in a clockwise direction.

At two points on the bend around the wheel, poultry carcasses are removed by intermediate wheels 27 which in turn transfer the carcasses to two weighing wheels 28.

After the carcasses have been weighed, they are placed on the outgoing conveyor 24 which is moving from left to right as viewed in Figure 4.

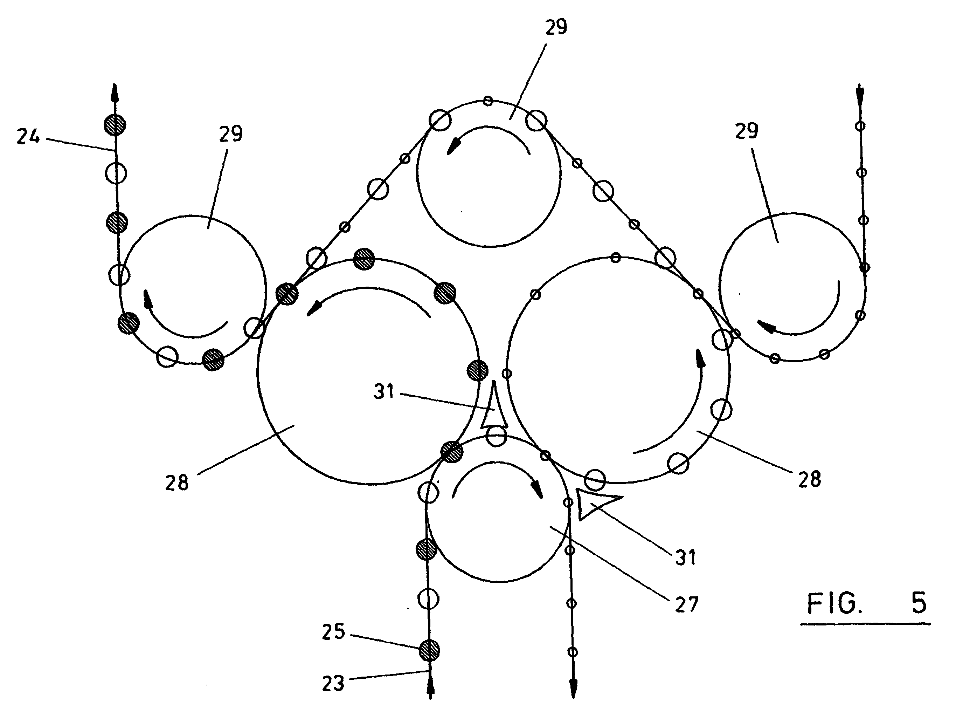

Figure 5 illustrates an alternative arrangement in which conveyor 23 and transfer wheel 26 remain the same, but the intermediate wheels 27 are eliminated. Transfer takes place directly from the transfer wheel 26 to the two weighing wheels 28.

Carcass control means may be provided, for example in the form of two guide bars 31 are provided, each being positioned in the nip between the transfer wheel 26 and one of the weighing wheels 28. The guide bar serves two purposes. The first purpose is to prevent the bird that is being transferred from pulling either of the adjacent birds out of their carrying shackle, for example if the wings have becomes interlocked. The second purpose is to keep the legs of the transferred bird in the second shackle in case it bounces out of the shackle, or is dragged out by the adjacent bird that had not been transferred.

Although control is less important when transferring carcasses back onto the shackles, since all the shackles are empty and it is not necessary to select specific shackles, control can nevertheless be provided in certain circumstances, for example by arranging for the conveyor 24 to pass around three control wheels, 29, one of the control wheels being arranged adjacent to each of the weighing wheels 28.

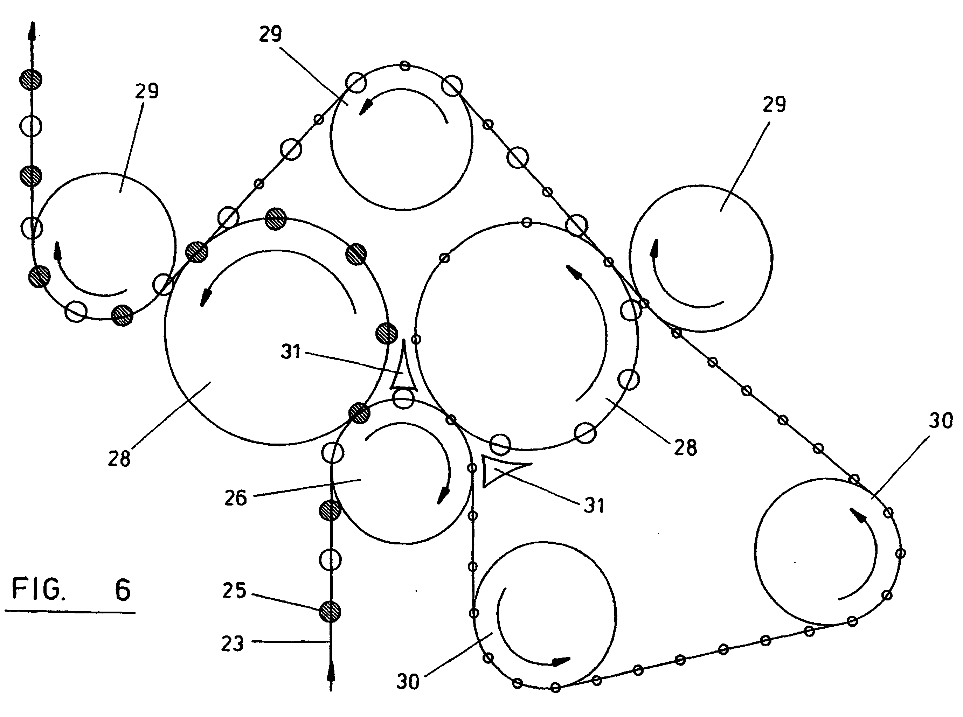

Figure 6 illustrates a further arrangement. If there is a requirement for carcasses to be placed back on the same conveyor, after weighing, then the conveyor 23 can be arranged to follow the return path shown, around two corner wheels 30 from when it picks up the two streams of weighed birds, firstly from the right hand weighing wheel 28 and then from the left hand weighing wheel.

The apparatus has two more features to cope with deformed or out of gauge shackles. Both features depend on the ability to detect out of gauge shackles. If this situation is detected by sensing means (not shown) it is possible to disengage the transfer mechanism on the transfer corner wheel 27 and the bird separator guide bar 31. The purpose of this is to prevent damage to either of these parts. Secondly, the transfer mechanism is also force sensitive, so that in the event of a jam up, the transfer mechanism will not go through its full stroke.

The embodiments described above are particularly effective in removing selected birds (for example every second or third bird depending on total bird throughput), even out of suspect shackles on the in-feed conveyor (which could be upwards of 1000 metres long, having wound through an air chiller for 30 to 60 minutes) onto the more easily maintained carriers within the transfer and weighing system.

By weighing birds in parallel, there is double the space between successive birds during the weighing cycle. This minimizes the risk that one bird will touch an adjacent bird and it also doubles the time available within which to weigh each bird, while maintaining a constant speed through the cycle.

The reader's attention is directed to all papers and documents which are filed concurrently with or previous to this specification in connection with this application and which are open to public inspection with this specification.

The invention is not restricted to the details of the foregoing embodiment(s). The invention is defined by the following claims.

## Claims

1. Apparatus for processing articles (10) moving in succession along a path, the apparatus comprising conveyor means (14,16,21,23) arranged to convey a succession of articles along the path, at least one transfer means (19a, 19b, 19c, 26, 27, 28) to split the succession of articles into at least two streams, and means (19a, 19b, 19c, 28) to weigh each article on the transfer means while the articles are split into the two streams.

2. Apparatus as claimed in Claim 1, in which the transfer means transfers articles from a first path of the conveyor means to a second path of the conveyor means.

3. Apparatus as claimed in Claim 1, in which the transfer means transfers articles from a first conveyor means to a second conveyor means.

4. Apparatus as claimed in Claim 3, in which the pitch of the articles i.e. the spacing between adjacent articles, is different on the second conveyor means, compared to the first conveyor means.

5. Apparatus as claimed in Claim 1, in which the transfer means comprises a mechanism operable to release an article from a first article carrier, swing the article into a weighing position, and then swing the article into another position in which it is placed on a second article carrier.

6. Apparatus as claimed in Claim 5, in which the article carriers comprise poultry carcass carrying shackles.

7. Apparatus as claimed in any one of the preceding claims, in which the conveyor means extends around a bend and articles are transferred from the conveyor means on the bend.

8. Apparatus as claimed in Claim 7, in which a comer wheel is used to provide the bend.

9. Apparatus as claimed in Claim 7 or Claim 8, in which the two streams are provided by removing articles from two or more points on the bend.

10. Apparatus as claimed in Claim 9, in which there is one transfer wheel around which the conveyor means passes, and at least two weighing wheels.

11. Apparatus as claimed in Claim 10, in which there is an intermediate wheel between the transfer wheel and each weighing wheel.

12. Apparatus as claimed in Claim 10 or Claim 11 in which at least one control wheel is arranged adjacent to at least one weighing wheel to control the articles as they are replaced on the conveyor means.

13. Apparatus as claimed in any one of Claims 10 to 12, in which control means are provided in the nip between a transfer wheel and a weighing wheel.

14. Apparatus as claimed in Claim 13, in which the control means is arranged to prevent an article which is being transferred, from being pulled away from its receiving carrier by either of the adjacent articles.

15. Apparatus as claimed in Claim 13 or Claim 14, in which the control means is arranged to stabilise the article being transferred, and/or lock the article into its receiving carrier.

16. A method of processing articles moving in succession along a path, comprising conveying the articles in succession along the path, splitting the succession of articles into at least two streams using at least one transfer means, and weighing each article on the transfer means while the articles are split into the two streams.

## Patentansprüche

1. Vorrichtung zum Verarbeiten von Gegenständen (10), die sich nacheinander entlang eines Weges bewegen, wobei die Vorrichtung Fördereinrichtungen (14, 16, 21, 23), die dafür eingerichtet sind, eine Folge von Gegenständen entlang des Weges zu bewegen, mindestens eine Übertragungseinrichtung (19a, 19b, 19c, 26, 27, 28), um die Folge von Gegenständen in mindestens zwei Ströme zu teilen, und eine Einrichtung (19a, 19b, 19c, 28) aufweist, um jeden Gegenstand auf der Übertragungseinrichtung zu wiegen, während die Gegenstände in die zwei Ströme geteilt werden.

2. Vorrichtung wie in Anspruch 1 beansprucht, bei der die Übertragungseinrichtung Gegenstände von einem ersten Weg der Fördereinrichtungen auf einen zweiten Weg der Fördereinrichtungen überträgt.

3. Vorrichtung wie in Anspruch 1 beansprucht, bei der die Übertragungseinrichtung Gegenstände von einer ersten Fördereinrichtung auf eine zweite Fördereinrichtung überträgt.

4. Vorrichtung wie in Anspruch 3 beansprucht, bei der der Abstand zwischen den Gegenständen, d.h. der Zwischenraum zwischen benachbarten Gegenständen, auf der zweiten Fördereinrichtung anders ist als auf der ersten Fördereinrichtung.

5. Vorrichtung wie in Anspruch 1 beansprucht, bei der die Übertragungseinrichtung einen Mechanismus aufweist, der betriebsfähig ist, einen Gegenstand von einem ersten Gegenstandsträger zu entfernen, den Gegenstand in eine Wiegeposition zu schwenken und dann den Gegenstand in eine andere Position zu schwenken, in der er auf einen zweiten Gegenstandsträger gesetzt wird.

6. Vorrichtung wie in Anspruch 5 beansprucht, bei der die Gegenstandsträger Schlachtgeflügel tragende Bügel aufweisen.

7. Vorrichtung wie einem der vorhergehenden Ansprüche beansprucht, bei der die Fördereinrichtung um eine Kurve herum verläuft und Gegenstände von der Fördereinrichtung auf die Kurve übertragen werden.

8. Vorrichtung wie in Anspruch 7 beansprucht, bei der ein Eckrad verwendet wird, um die Kurve zu erzeugen.

9. Vorrichtung wie in Anspruch 7 oder 8 beansprucht, bei der die zwei Ströme erzeugt werden, indem Gegenstände von zwei oder mehr Stellen auf der Kurve entfernt werden.

10. Vorrichtung wie in Anspruch 9 beansprucht, bei der es ein Übertragungsrad, um das herum die Fördereinrichtung verläuft, und mindestens zwei Wiegeräder gibt.

11. Vorrichtung wie in Anspruch 10 beansprucht, bei der es ein Zwischenrad zwischen dem Übertragungsrad und jedem Wiegerad gibt.

12. Vorrichtung wie in Anspruch 10 oder 11 beansprucht, bei der mindestens ein Kontrollrad angrenzend an mindestens ein Wiegerad angeordnet ist, um die Gegenstände zu kontrollieren, wenn sie auf die Fördereinrichtung zurückgesetzt werden.

13. Vorrichtung wie in einem der Ansprüche 10 bis 12 beansprucht, bei der Kontrollmittel an der Berührungsstelle zwischen einem Übertragungsrad und einem Wiegerad vorgesehen sind.

14. Vorrichtung wie in Anspruch 13 beansprucht, bei der die Kontrollmittel dafür eingerichtet sind, zu verhindern, dass ein gerade übertragener Gegenstand durch einen der benachbarten Gegenstände von seinem aufnehmenden Träger weggezogen wird.

15. Vorrichtung wie in Anspruch 13 oder 14 beansprucht, bei der die Kontrollmittel dafür eingerichtet sind, den gerade übertragenen Gegenstand zu stabilisieren und/oder den Gegenstand in seinem aufnehmenden Träger zu verriegeln.

16. Verfahren zum Verarbeiten von Gegenständen, die sich nacheinander entlang eines Weges bewegen, wobei man die Gegenstände nacheinander entlang des Weges befördert, die Folge von Gegenständen unter Verwendung mindestens einer Übertragungseinrichtung in mindestens zwei Ströme teilt und jeden Gegenstand auf der Übertragungseinrichtung wiegt, während die Gegenstände in die zwei Ströme geteilt werden.

## Revendications

1. Appareil pour traiter des articles (10) se déplaçant en succession le long d'un chemin, l'appareil comprenant des moyens de convoyage (14, 16, 21, 23) agencés pour convoyer une succession d'articles le long du chemin, au moins un moyen de transfert (19a, 19b, 19c, 26, 27, 28) pour diviser la succession d'articles en au moins deux flux, et des moyens (19a, 19b, 19c, 28) pour peser chaque article sur le moyen de transfert pendant que les articles sont divisés en deux flux.

2. Appareil selon la revendication 1, où le moyen de transfert transfère des articles d'un premier chemin du moyen de convoyage à un second chemin du moyen de convoyage.

3. Appareil selon la revendication 1, où le moyen de transfert transfère des articles d'un premier moyen de convoyage à un second moyen de convoyage.

4. Appareil selon la revendication 3, où le pas des articles, c'est-à-dire l'espacement entre des articles adjacents, est différent sur le second moyen de convoyage, en comparaison au premier moyen de convoyage.

5. Appareil selon la revendication 1, où le moyen de transfert comprend un mécanisme actionnable pour relâcher un article d'un premier porteur d'article, à faire pivoter l'article dans une position de pesage et à faire pivoter ensuite l'article dans une autre position dans laquelle il est placé sur un second porteur d'article.

6. Appareil selon la revendication 5, dans lequel les porteurs d'article comprennent des attaches porteuses de carcasse de volaille.

7. Appareil selon l'une des revendications précédentes, où le moyen de convoyage s'étend autour d'un coude, et les articles sont transférés du moyen de convoyage sur le coude.

8. Appareil selon la revendication 7, où une roue-cornière est utilisée pour réaliser le coude.

9. Appareil selon la revendication 7 ou la revendication 8, où les deux flux sont réalisés en retirant des articles de deux points ou plus sur le coude.

10. Appareil selon la revendication 9, où il y a une roue de transfert autour de laquelle le moyen de convoyage passe, et au moins deux roues de pesage.

11. Appareil selon la revendication 10, où il y a une roue intermédiaire entre la roue de transfert et chaque roue de pesage.

12. Appareil selon la revendication 10 ou la revendication 11, où au moins une roue de commande est agencée pour être adjacente à au moins une roue de pesage pour contrôler les articles quand ils sont replacés sur le moyen de convoyage.

13. Appareil selon l'une des revendications 10 à 12, où les moyens de contrôle sont prévus dans le pincement entre une roue de transfert et une roue de pesage.

14. Appareil selon la revendication 13, où le moyen de contrôle est agencé pour empêcher qu'un article, qui est en train d'être transféré, soit tiré au loin de son porteur de réception par l'un quelconque des articles adjacents.

15. Appareil selon la revendication 13 ou la revendication 14, où le moyen de contrôle est agencé pour stabiliser l'article en train d'être transféré et/ou pour bloquer l'article dans son porteur de réception.

16. Procédé de traitement d'articles se déplaçant en succession le long d'un chemin, comprenant le convoyage des articles en succession le long du chemin, la division de la succession d'articles en au moins deux flux en utilisant au moins un moyen de transfert et la pesée de chaque article sur le moyen de transfert pendant que les articles sont divisés en deux flux.
